# EUROPEAN PATENT APPLICATION

(11) **EP 4 844 603 A1**
(43) Date of publication of application: **25.11.2026**
(21) Application number: 26178176.9
(22) Date of filing: 12.05.2026
(51) Int. Cl.: G06F 16/3329

(54) **QUERY RESPONSE VALIDATION**

(30) Priority: 20.05.2025 US 202519213637
(71) Applicant: Microsoft Technology Licensing, LLC, Redmond, WA 98052 (US)
(72) Inventor: CHEN, Yueyang, Redmond, Washington, 98052 (US); HUAN, Min, Redmond, Washington, 98052 (US); WALL, Matthew David, Redmond, Washington, 98052 (US); HE, Chujie, Redmond, Washington, 98052 (US); TRAN, Kayla Mailinh, Redmond, Washington, 98052 (US)
(74) Representative: CMS Cameron McKenna Nabarro Olswang LLP

(57) **Abstract**

A method of validating query response is provided. The method includes receiving a user query in natural language, generating a database query in a database language based on the user query, and retrieving data from a database, wherein the data is retrieved in response to executing the database query in the database. The method further includes generating an initial response based on the database query and the data; determining whether the initial response is consistent with the user query; and based on determining that the initial response is not consistent with the user query, revising the initial response.

## Description

### BACKGROUND

The use of generative Large Language Model (LLM) has become more prevalent for various tasks. However, conventional generative LLMs have notable shortcomings. More specifically, conventional LLMs sometimes produce incorrect or misleading responses, as they rely on probabilities and patterns in the training data rather than an actual understanding of the facts. The inaccuracy issue of LLMs is exacerbated by the overconfidence of LLMs as LLMs often present answers in a confident tone, even when they are uncertain or incorrect. As a result, LLMs being overconfident in inaccurate responses can lead to poor decision making based on false or unreliable information.

### SUMMARY

The following Summary is provided to illustrate some examples in a simplified form that are further described in the Detailed Description. This Summary is not intended to identify key features or essential features of the claimed subject matter, nor meant to limit all examples to any particular configuration or sequence of operations.

Solutions for validating query response include: receiving a user query in natural language; generating a database query in a database language based on the user query; retrieving data from a database, wherein the data is retrieved in response to executing the database query in the database; generating an initial response based on the database query and the data; determining whether the initial response is consistent with the user query; and based on determining that the initial response is not consistent with the user query, revising the initial response.

### BRIEF DESCRIPTION OF THE DRAWINGS

The disclosed examples are described below with reference to accompanying drawing figures listed below, wherein:
FIG. 1 is a block diagram illustrating a system suitable for implementing a query response validator according to an example;
FIG. 2A-2C are workflow diagrams illustrating sequences of steps that can be performed during a query response validation process according to an example;
FIG. 3 is a flow chart illustrating operations of a computing device to evaluate the query response validator according to an example;
FIG. 4 is a flow chart illustrating operations of a computing device to validate a query response by examining an initial query response according to an example;
FIG. 5 is a flow chart illustrating operations of a computing device to validate a query response by examining a mocked query according to an example;
FIG. 6 is a block diagram illustrating a computing device suitable for implementing various aspects of the disclosure.

Corresponding references characters indicate corresponding parts throughout the drawings,

### DETAILED DESCRIPTION

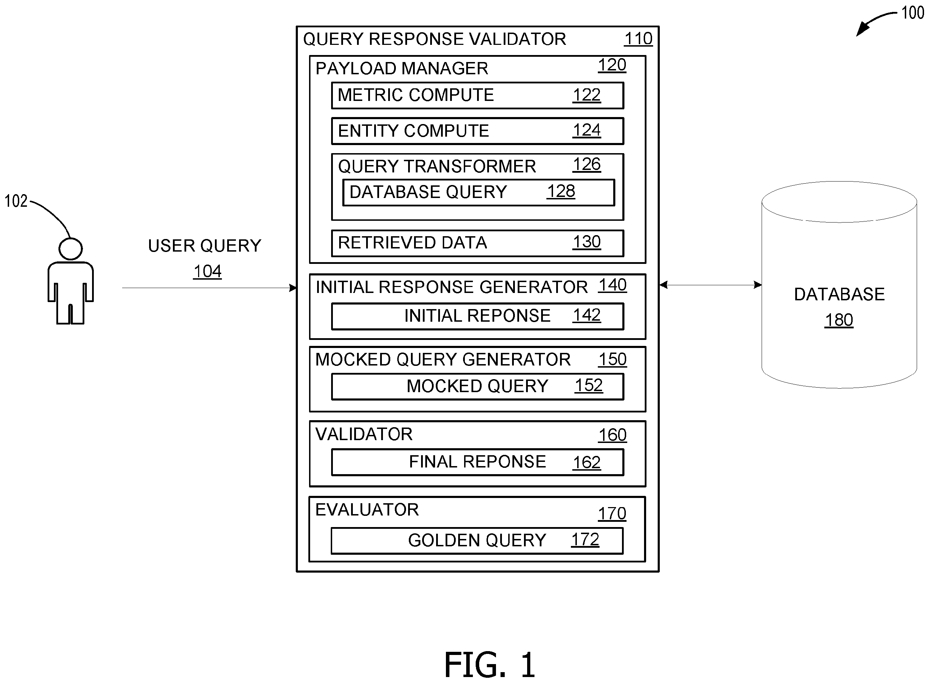

Certain embodiments of systems, devices, components, modules, routines, data structures, and processes validating a query response are described below. In the following description, specific details of components are included to provide a thorough understanding of embodiments of the disclosed technology. A person skilled in the relevant art will also understand that the technology can have additional embodiments. The technology can also be practiced without several of the details of the embodiments described below with reference to FIGS. 1-6.

The various examples will be described in detail with reference to the accompanying drawings. Wherever possible, the same reference numbers will be used throughout the drawings to refer to the same or like parts. References made throughout this disclosure relating to specific examples and implementations are provided solely for illustrative purposes but, unless indicated to the contrary, are not meant to limit all examples.

Generative LLMs sometimes fall short in producing accurate or complete responses. This issue is particularly evident when there is a mismatch between the query posed to the LLM and the specific capabilities of a database. In particular, when the data retrieved from the database does not completely answer the user's question, or some of the requested information is missing, the conventional LLM may fabricate the response or overfit the data to answer the user's question. Additionally, when processing a query for the user, the LLM may unintentionally broaden the scope of the query in an attempt to do its best to answer the query, even when it is instructed not to do so. This may result in providing vaguely related, but incorrect data to the user, misguiding the user to make a poor decision.

Typically, conventional LLMs have experienced difficulties in the following query scenarios: 1) handling out-of-scope queries, 2) resolving partial information, and 3) adapting to precise terminologies in queries.

First, conventional LLMs may have difficulties answering out-of-scope queries. An example out-of-scope query is described in Table 1. For this example, the only data available in the database is a general list of managers, without any specific mapping from the managers to the user. However, when asked "Who is my manager?" the LLM may retrieve the list of managers and respond with the first manager it identifies, rather than admitting that the manager of the user cannot be found.

**Table 1. Out-of-scope Query Example (Prior art)**

| | |
|---|---|
| Query | Who is my manager? |
| Query result | List of general managers - Vincent Wong, John Smith, Joan Lee |
| Response | Your manager is Vincent Wong |

Conventional LLMs also struggle with partial information resolution. An example of a partial information resolution is described in the Table 2. Conventional LLMs may experience difficulty providing a response when a portion of the composite query is not answerable. For this example, the database may only have information on the total number of employees, but a user may ask for more specific information about the employees, which the database cannot provide. For example, when asked "How many employees in my team are happy about their job?" instead of differentiating between the number of employees in the team and the number of employees in the team who are happy about their job, the LLM might provide the only information it retrieves (e.g., the total number of employees) as the response and add in the phrase "is happy about their job." This would lead to an incorrect and misleading response. The expected response should acknowledge the number of team members and then clarify the lack of data for job satisfaction. However, the LLM might simply state the number of employees without addressing their happiness.

**Table 2. Partial information resolution Example (Prior art)**

| | |
|---|---|
| Query | How many employees in my team are happy about their job? |
| Query result | Total number of employees - xx |
| Response | There are xx employees in my team that are happy about their job. |

Lastly, adapting to precise terminologies is another area where conventional LLMs often fall short. This involves queries that require specific language or terms that might not be within the LLM's trained vocabulary or have different contextual meanings. When a user uses a term that is similar to a term in the LLM's vocabulary, the LLM may overfit its answer, acting as if the term in the LLM's vocabulary can encompass or substitute for the specific term that the user uses. For this example, the user's team may have 10 mechanical engineers but no electrical engineers. When asked, "How many electrical engineers are in my team?" the conventional LLM might respond with an inaccurate number because it does not recognize the specific term "electrical engineers" among the team's structure. Instead, it might generalize the term or misconstrue the query, leading to an erroneous answer. For this example, the LLM may misconstrue the term "electrical engineer" as encompassing other engineers, and respond with a wrong answer, "there are 10 electrical engineers."

**Table 3. Precise Terminology Query Example (Prior art)**

| | |
|---|---|
| Query | How many electrical engineers are in my team? |
| Query result | Count for Mechanical engineers: 10 |
| Response | There are 10 electrical engineers in your team. |

As described above, the conventional LLMs can sometimes produce inaccurate or incomplete responses due to a mismatch between the user's query and the SQL database's capabilities. This can result in inaccurate, misleading, or irrelevant answers. This issue can be aggravated by the LLM's tendency to exhibit overconfidence in the incorrect or misleading response. A notable limitation of generative LLMs is their tendency to present responses with high confidence, regardless of the accuracy of the response. This overconfidence might lead users to trust incorrect outputs without further verification, resulting in poor decision making or flawed analysis. These issues present technological problems because the conventional LLMs lack the capability to verify their responses before providing them to the users. In addition, the conventional LLMs often fail to adjust the level of confidence in their responses and/or include disclaimers reflecting the uncertainty of their response.

Aspects of this disclosure solve multiple problems that are necessarily rooted in computer technology and render use of generative LLMs more reliable and dependable by providing the practical result of improved accuracy and enhanced performance of generative LLMs. Several embodiments of the disclosed technology can enhance a level of accuracy and reliability by incorporating a novel validation process for LLM response generation. Aspects of this disclosure improve the LLM capabilities by ensuring that a user query is accurately addressed, and the precise information is presented to the user. Aspects of this disclosure improve the overall accuracy and reliability of the LLM responses to user queries, ensuring a better user experience.

Several embodiments of this disclosure improve the performance of the LLMs by incorporating a validation step. The validation step includes generating a tentative response or a mocked query based on the metrics and entities in the original user query, and comparing the results with the user's original query. When any discrepancy is detected between the mocked query and the original user query, or the tentative response and the original user query, the final response from the LLM can be rewritten with a disclaimer to describe the discrepancies. Aspects of this disclosure improve the performance of generative LLMs by detecting the intent mismatches between the user queries and the actual computational capabilities of the database and providing accurate responses with clear explanations, including acknowledgment of any data limitations or discrepancies. Aspects of this disclosure enhance the accuracy and reliability of the LLM while not sacrificing the latency of the performance.

Furthermore, aspects of this disclosure improve the validation process by employing an evaluation method, which updates and adjusts the validation process without additional training. Based on the evaluation result, the validation process can be adjusted directly by modifying prompts provided to the LLM without re-training and/or fine-tuning the LLM. The evaluation and adjustment methods described in this disclosure efficiently and effectively improve the validation process without expensive and time-consuming retraining and/or fine-tuning.

FIG. 1 is a schematic diagram illustrating a computing system 100 implementing the query response validation in accordance with embodiments of the disclosure. As illustrated in FIG. 1, the query response validator 110 comprises a payload manager 120, initial response generator 140, mocked query generator 150, validator 160, and evaluator 170. The query response validator 110 receives a user query 104 from a user 102. The query response validator 110 is connected to a database 180 and is configured to retrieve data relevant to the user query 104. The query response validator 110 connects to the database 180 through an appropriate interface or middleware. In some embodiments, an appropriate application programming interface (API) or database connectivity interfaces are called to connect the query response validator 110 to the database 180.

In some embodiments, the query response validator 110 is an LLM, which is configured to perform a variety of tasks by adapting to the specific instructions embedded within prompts it receives. These prompts serve as guidelines or frameworks that configure the LLM to perform operations. In some other embodiments, the query response validator 110 is composed of one or more LLMs, each configured to communicate with each other.

The database 180 can be configured to manage and store various types of data. In some embodiments, the database 180 includes enterprise data. The enterprise data generally refers to any type of information collected, managed, and utilized by a business, institution, company, enterprise, or an entity to operate effectively and make decision. The enterprise data may encompass a wide range of data types, including, but not limited to, employee data, financial data, operational data, customer data, sales and marketing data, legal and compliance data, strategic data, product and service data, technology data, and governance data. The enterprise data is described herein as an example of a type of data stored in the database 180, but is not intended to limit the scope to only this type of data.

As illustrated in FIG.1, the user 102 provides a user query 104 to the query response validator 110. The user 102 provides the user query 104 in natural language. In some embodiments, the payload manager 120 is an LLM that interprets the user query 104 in natural language and translates it to a database language. The payload manager 120 interprets the intent of the user query 104 and transforms it into an appropriate database query structure. More specifically, the payload manager 120 uses the metric compute 122 and entity compute 124 to detect metrics and entities from the user query 104. A metric of a query generally refers to a measurement or quantifiable value that provides information about the query. An entity of a query generally refers to the subject or object of focus within the query, typically representing "who" or "what" the metric is applied to. An entity can be a group, object, or concept that the query aims to inquire about. For example, if the user query 104 is "How many electronic engineers are in my team?" the metric compute 122 detects "count" as the metric as the user query 104 aims to measure the number of electronic engineers meeting the given condition, and the entity compute 124 detects "electronic engineers" as the entity as the electronic engineers are the individuals whose count is being evaluated.

After the metric compute 122 and the entity compute 124 detect the metrics and entities from the user query 104, the query transformer 126 of the payload manager 120 translates the user query 104 into the database query 128 based on the detected metrics and entities. A database query generally refers to a request made to a database to retrieve, manipulate, or store data. The database query 128 can be in a database language suitable for the database 180, such that the execution of the database query 128 can retrieve, manipulate, or store data in the database 180.

The payload manager 120 and/or the query transformer 126 are given the information on the types of data contained in the database 180, such as tables, columns, rows, and values stored in the database 180. In some embodiments, the query transformer 126 maps the metrics and entities to database schema suitable for the database 180. For example, for the query "How many electronic engineers are in my team?" "team" table with columns "role" and "member name" can be found in the database 180. The schema "role" can be mapped to "electronic engineer" in the query. Based on the database 180 and the user query 104, any suitable database schema can be used to generate the database query 128.

The database query 128 may include commands, such as "filter" and/or "group by." In some embodiments, the database query 128 is a SQL query. For example, if the user query 104 is "How many electronic engineers are in my team?" the database query can be described as a SQL query in Table 4.

**Table 4. Example SQL Query**

| | |
|---|---|
| Query | How many electrical engineers are in my team? |
| SQL Query (e.g., database query 128) | SELECT Role, COUNT (*) AS EngineerCount |
| | FROM Team |
| | FILTER BY Role = 'Electronic Engineer' |
| | GROUP BY Role; |

The SQL query described in Table 4 is provided as an example only and is not intended to limit the scope of the disclosure. Any suitable database query language can be used to convert the user query 104 into the database query 128 for execution on the database 180. Although some of the examples described herein are related to the organization data of an entity, the methods and systems described in this disclosure can apply to any queries regarding any types of data.

The database query 128 is provided to the database 180, which executes the database query 128 and returns data (e.g., retrieved data 130). When the database 180 does not contain any matching data for the database query 128, the payload manager 120 may obtain related available data in the database 180 as the retrieved data 130. For example, if the user query 104 is asking about electrical engineers, but the database 180 only has a row for mechanical engineers and no information about electrical engineers, the payload manager 120 may automatically retrieve data from the row for mechanical engineers as no close match for electrical engineers is found in the database 180. In some embodiments, if the payload manager 120 obtains the related data as the retrieved data 130, the database query 128 may be the query that corresponds to the retrieved data 130.

Alternatively, if the database 180 does not contain any matching row, column, table, or values for the metrics and/or entities the query transformer 126 may map the metrics and/or entities to relevant or related database schema. For example, when the database 180 does not have any row for electrical engineers, but contains a row for mechanical engineers, the query transformer 126 may map the entity to mechanical engineers.

The payload manager 120 provides the database query 128 and the retrieved data 130 to the initial response generator 140. The initial response generator 140 receives the database query 128 and the retrieved data 130, and generates an initial response 142 in natural language. The initial response generator 140 is prompted to generate the initial response 142 only based on the database query 128 and the retrieved data 130 without accessing and/or being exposed to the user query 104. In some embodiments, this is done by only including the database query 128 and the retrieved data 130 in the prompt provided to the initial response 142 and excluding the user query 104 from the prompt. In some embodiments, the initial response 142 is generated based on the retrieved data 130 only, by including the retrieved data 130 in the prompt provided to the initial response generator 140.

Generating the initial response 142 solely based on the database query 128 and/or retrieved data 130 allows the initial response generator 140 to accurately reflect the retrieved data 130 in the initial response 142 without being influenced by the original user query 104. The initial response 142 is provided to the validator 160 for a response validation process.

The validator 160 receives the initial response 142 and the user query 104, and determines whether there is any inconsistency, mismatch, or discrepancy between the initial response 142 and the user query 104. More specifically, the validator 160 is prompted with the user query 104 as the question and the initial response 142 as the answer to analyze whether the answer (e.g., initial response 142) fully addresses the question (e.g., user query 104). When the validator 160 determines that the initial response 142 does not fully address the user query 104 or detects any mismatch between the initial response 142 and the user query 104, the validator 160 revises the initial response 142, and provides a final response 162 with a disclaimer, which acknowledges any identified discrepancies. The disclaimer may indicate that the specific data requested could not be found.

Table 5 illustrates exemplary final responses with disclaimers. As described with the reference to Table 1-3, the database 180 may not have exact information that the user 102 requests. However, by including the validation step as described above, the query response validator 110 can provide more accurate and complete response.

For the first example described with reference to Table 1, the payload manager 120 retrieves a list of general managers from the database 180 in response to the query "Who is my manager?" When the validator 160 determines that the initial response 142, which consists of the list of general managers in this example, is inconsistent with the user query 104, which is inquiring about the user's manager, the initial response 142 is revised. The final response 162 includes an explanation that the information about the user's manager cannot be found.

For the second example described with reference to Table 2, the payload manager 120 retrieves the total number of employees in the user's team from the database 180 in response to the query "How many employees in my team are happy about their job?" The initial response 142 only states the total number of employees in the user's team without mentioning how many of them are happy. Because the initial response 142 is inconsistent with the user query 104, the initial response 142 is revised.

For the third example described with reference to Table 3, the payload manager 120 retrieves the number of mechanical engineers in the user's team from the database 180 in response to the query "How many electrical engineers are in my team?" Based on the retrieved data 130, which only includes the number of mechanical engineers, the initial response 142 is generated to state the number of mechanical engineers only. Because the initial response 142 is inconsistent with the user query 104, the validator 160 performed the validation process and rewrites the final response 162 with a disclaimer.

**Table 5. Response Revision with Disclaimer**

| | | |
|---|---|---|
| Out-of-Scope Query | User Query | Who is my manager? |
| | Retrieved Data | List of general managers - Vincent Wong, John Smith, Joan Lee |
| | Initial Response | I found a list of general managers: Vincent Wong, John Smith, and Joan Lee. |
| | Revised Response | I could not find a manager assigned to you. However, here is a list of general managers: Vincent Wong, John Smith, and Joan Lee. |
| Partial Information Resolution | User Query | How many employees in my team are happy about their job? |
| | Retrieved Data | Total number of employees - xx |
| | Initial Response | There are xx employees in your team. |
| | Revised Response | There are xx employees in your team. However, we don't have the data for employees who are not happy about their job. |
| Special term | User Query | How many electrical engineers are in my team? |
| | Retrieved Data | Mechanical Engineer: 10 |
| | Initial Response | There are 10 mechanical engineers in your team. |
| | Revised Response | I was not able to find how many electrical engineers there were in your team. However, there are 10 mechanical engineers in your team. |

By incorporating the validation process that detects any mismatch or discrepancy between the original user query (e.g., user query 104) and the initial response (e.g., initial response 142), which is generated solely on the database query 128 and the retrieved data 130, aspects of this disclosure can bypass the tendency of generative LLM to overfit the answer, and enable the generative LLM to provide more grounded responses that acknowledge what it can and cannot answer.

In some embodiments, the database query 128 is provided to the mocked query generator 150. The mocked query generator 150 analyzes the database query 128 and reconstructs what the original query would have been in natural language. More specifically, the mocked query generator 150 re-creates the mocked query 152 based on the database query 128. The mocked query 152 is generated based solely on the database query 128 by including the database query 128 in the prompt provided to the mocked query generator 150. The user query 104 is excluded from the prompt provided to the mocked query generator 150, such that the mocked query 152 can be generated without any influence from the user query 104.

In some other embodiments, the mocked query 152 is generated based on the retrieved data 130, where the mocked query 152 is reconstructed as a query, given the retrieved data 130 as the answer. In other embodiments, the mocked query 152 is generated based on the combination of the database query 128 and the retrieved data 130.

After the mocked query 152 is generated, the mocked query 152 is provided to the validator 160 with the user query 104 and the retrieved data 130. The validator 160 is prompted to compare the user query 104 with the mocked query 152 and detect any intent mismatches. If any mismatch is detected, the validator 160 generates a final response 162 based on the retrieved data 130 and includes a disclaimer explaining the intent mismatch. More specifically, the final response 162 may include an explanation and/or a disclaimer why the user query 104 cannot be fully answered. In some embodiments, the explanation may indicate what portion(s) of the user query 104 cannot be answered. The disclaimer may include a statement that a part of the user query 104 cannot be answered at this time, and/or the exact match for the user query 104 cannot be found.

Table 6 illustrates exemplary final responses generated by the validator 160 after mismatches between the mocked query 152 and the user query 104 are detected.

For the first example described with reference to Table 1, the information about the user's manager cannot be found in the database 180. The payload manager 120 retrieves the related data, which contains the information about all managers, as the retrieved data 130. Based on the database query 128, which corresponds to the retrieved data 130, the generated mocked query 152 inquires about managers in general, not about the user's manager. Because the mocked query 152 is inconsistent with the user query 104, the validator 160 generates the final response 162 with an explanation that the information about the user's manager cannot be found.

For the second example described with reference to Table 2, because the database 180 does not have the information about employees who are happy about their job, the payload manager 120 obtains the related data, which is the total number of employees, as the retrieved data 130. The database query 128, which corresponds to the retrieved data 130, inquires about the total number of employees. Because the mocked query 152 generated from the database query 128 is inconsistent with the user query 104, the final response 162 includes an explanation.

For the third example described with reference to Table 3, the database query 128 is inquiring about the number of any engineers in the team, as the number of electrical engineers cannot be found in the database 180. Because the mocked query 152, which is generated from the database query 128, is inconsistent with the user query 104, the validator 160 generates the final response 162 with an explanation.

**Table 6. Final Response based on Mocked query analysis**

| | | |
|---|---|---|
| Out-of-Scope Query | Query | Who is my manager? |
| | Database query | SELECT Role, COUNT (*) AS ManagerCount FROM People FILTER BY Role = 'MANAGER'; |
| | Mocked Query | Who are the managers? |
| | Final Response | I could not find a manager assigned to you. However, here is a list of general managers: Vincent Wong, John Smith, and Joan Lee. |
| Partial Information Resolution | Query | How many employees in my team are happy about their job? |
| | Database Query | SELECT COUNT (*) AS EmployeeCount |
| | | FROM Employees |
| | | FILTER BY TEAM = 'Team Name'; |
| | Mocked Query | How many employees are in the team? |
| | Revised Response | There are xx employees in your team. However, we don't have the data for employees who are happy about their job. |
| Special term | Query | How many electrical engineers are in my team? |
| | Database Query | SELECT COUNT (*) AS EngineerCount |
| | | FROM Team |
| | | FILTER BY Role LIKE '&Engineer&' GROUP BY Role; |
| | Mocked Query | How many engineers are in my team? |
| | Revised Response | I was not able to find how many electrical engineers there were in your team. However, there are 10 mechanical engineers in your team. |

The validator 160 is an LLM. In some embodiments, the initial response generator 140, the mocked query generator 150, and the validator 160 are the same LLM. The same LLM model can be used for the initial response generator 140, the mocked query generator 150, and the validator 160, with different prompts. In some other embodiments, the initial response generator 140, the mocked query generator 150, and/or the validator 160 are different LLMs. In some embodiments, the payload manager 120 is also an LLM. The same LLM used for the initial response generator 140, the mocked query generator 150, and the validator 160 can be used as the payload manager 120. In some other embodiments, the payload manager 120 is a different LLM configured to generate the database query 128.

In some embodiments, the validator 160 is trained using few-shot learning, where a few examples of the disclaimers are included in a prompt provided to the validator 160. In some other embodiments, the validator 160 is trained using one-shot learning with only one example in the prompt. Additionally, or alternatively, the validator 160 may be trained using in-context learning, where the validator 160 uses examples provided within the prompt to rewrite the response with a disclaimer without any additional training or fine-tuning. In some other embodiments, Chain-of-Thought (CoT) prompting may be used to provide step-by-step reasoning examples in the prompt to help the validator 160 learn to generate the explanation or the disclaimer.

The query response validator 110 includes an evaluator 170, which evaluates the performance of the query response validator 110. In some embodiments, the evaluator 170 can be the same LLM as the validator with different prompts. In some other embodiments, the evaluator 170 is a different LLM. The evaluator 170 uses a set of golden queries 172 to evaluate the validator 160. The golden queries 172 includes a set of labeled query-response pairs, each pair including a query and an expected response for the query. Some query-response pairs of the golden queries 172 include an indication that a revision is required to result in the corresponding expected response. The query response validator 110 processes the golden queries 172 to determine the quality of the prompts used for the initial response generator 140, mocked query generator 150, and/or the validator 160. As described in more detail below, when the validator 160 compares the initial response 142 and the user query 104, the evaluator 170 verifies whether the revision of the initial response 142 is performed as expected. Additionally, or alternatively, the validator 160 determines whether the final response 162 aligns with the expected response of the golden queries 172.

As described above, after the initial response generator 140 generates the initial response 142, the validator 160 determines, based on the analysis of the initial response 142 and the user query 104, whether to revise the initial response 142. As the validator 160 processes the golden queries 172 and generates the final response 162, the final response 162 is checked against the expected responses of the golden queries 172 to determine whether a revision is being performed as expected. If the revision is not performed as expected-such as when a revision is anticipated but not performed, or when the revision occurs unexpectedly, it is considered as a failure. In case of a failure, the prompts given to the initial response generator 140 and/or the validator 160 are adjusted accordingly.

Similarly, when the mocked query generator 150 generates the mocked query 152 as the query response validator 110 processes a query of the golden queries 172, the validator 160 determines, based on the comparison between the mocked query 152 and the user query 104, whether to include an explanation and/or a disclaimer in the final response 162. The final response 162 is compared to the corresponding expected response from the golden queries 172. If the final response 162 and the expected response approximately match, it is considered a pass. If the responses are meaningfully different, it is considered a failure. In case of a failure, the prompts given to the mocked query generator 150 and/or the validator 160 are adjusted accordingly.

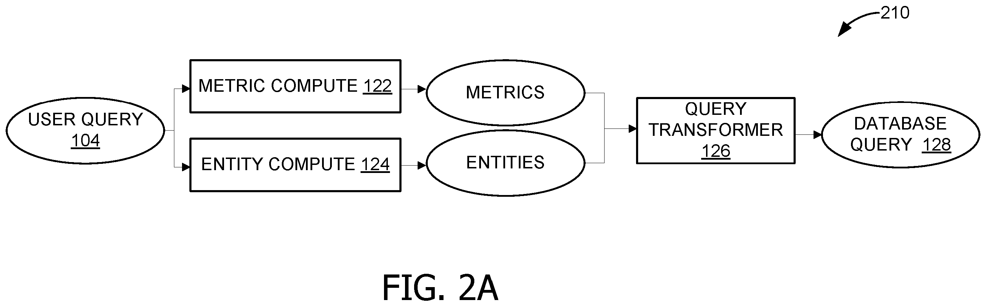

FIG. 2A-2C are workflow diagrams illustrating sequences of steps that can be performed during validating a query response. FIG. 2A illustrates sequences of steps of generating a database query (e.g., database query 128) from a user query (e.g., user query 104). As described with reference to FIG. 1, the payload manager 120 receives the user query 104 in natural language. The metric compute 122 and the entity compute 124 detect metrics and entities from the user query 104, respectively. Based on the detected metrics and entities, the query transformer 126 transforms the user query 104 in natural language into the database query 128 in a database language (e.g., SQL).

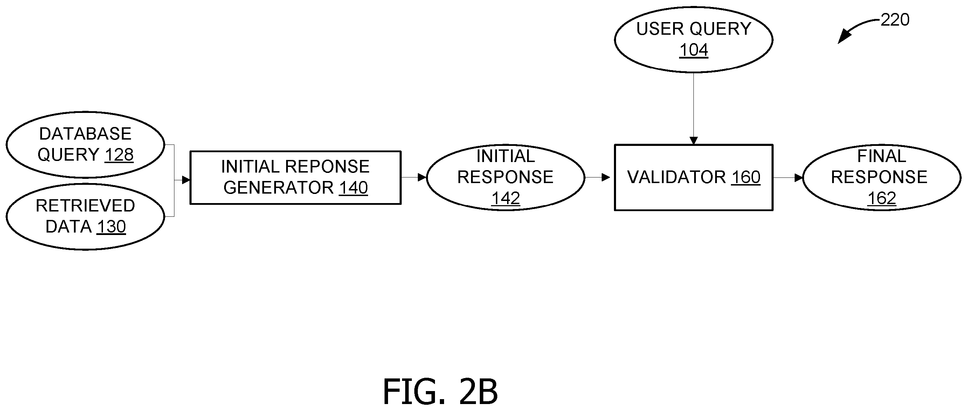

FIG. 2B illustrates sequences of steps of generating an initial response (e.g., initial response 142) and validating the initial response. The database query 128, which is generated by the payload manager 120, and the retrieved data 130, which is retrieved from the database 180 by executing the database query 128, are provided to the initial response generator 140. The initial response generator 140 generates the initial response 142 based solely on the database query 128 and the retrieved data 130. The initial response 142 is provided to the validator 160, along with the user query 104. The validator 160 analyzes the user query 104 and the initial response 142 as a query-response pair, and identifies any intent mismatch and/or discrepancy between the user query 104 and the initial response 142. If the validator 160 determines that the user query 104 and the initial response 142 are coherent, the validator 160 outputs the initial response 142 as the final response 162 for the user query 104. If the validator 160 determines that the initial response 142 does not fully or correctly address the user query 104, the validator rewrites the initial response 142 with a disclaimer to acknowledge any discrepancies, and outputs the revised initial response as the final response 162 for the user query 104.

As described in reference to FIG. 1, in some embodiments, the initial response generator 140 and the validator 160 are the same LLM, and the initial response 142 is reprocessed by the same LLM with the validator prompt. In other embodiments, a different LLM than the initial response generator 140 is called as the validator 160.

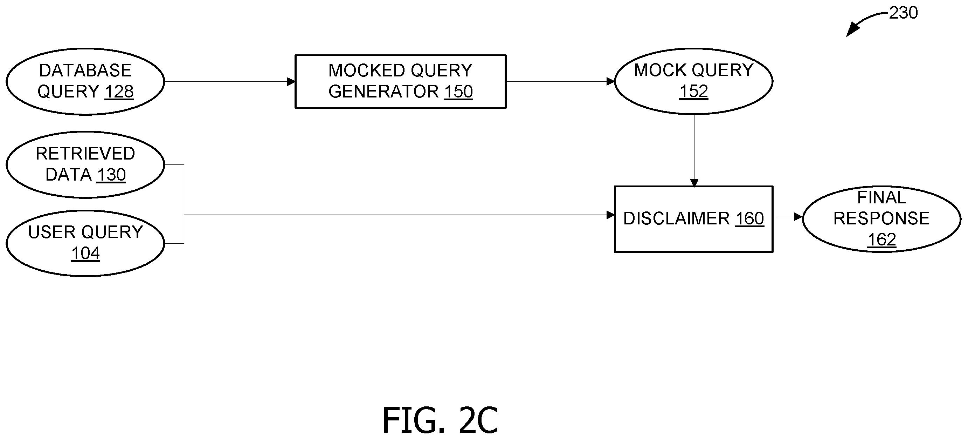

FIG. 2C illustrates sequences of steps of generating a mocked query (e.g., mocked query 152) and generating a final response based on a comparison between the mocked query and the original user query. The database query 128, which is generated by the payload manager 120, is provided to the mocked query generator 150. The mocked query generator 150 generates the mocked query 152 based solely on the database query 128. The mocked query 152 is provided to the validator 160, along with the user query 104 and the retrieved data 130. The validator 160 compares the mocked query 152 with the user query 104 to detect any intent mismatch. If the validator 160 determines that the user query 104 and the mocked query 152 are approximately similar, the validator 160 generates the final response 162 based on the retrieved data 130 without additional explanation. If the validator 160 determines that the mocked query 152 is meaningfully different than the user query 104, the validator 160 generates the final response 162 with an explanation and/or a disclaimer to explain any detected mismatch.

As described in reference to FIG. 1, in some embodiments, the mocked query generator 150 and the validator 160 are the same LLM, and the mocked query 152 is fed back into the same LLM with the validator prompt. In other embodiments, a different LLM than the mocked query generator 150 is called as the validator 160.

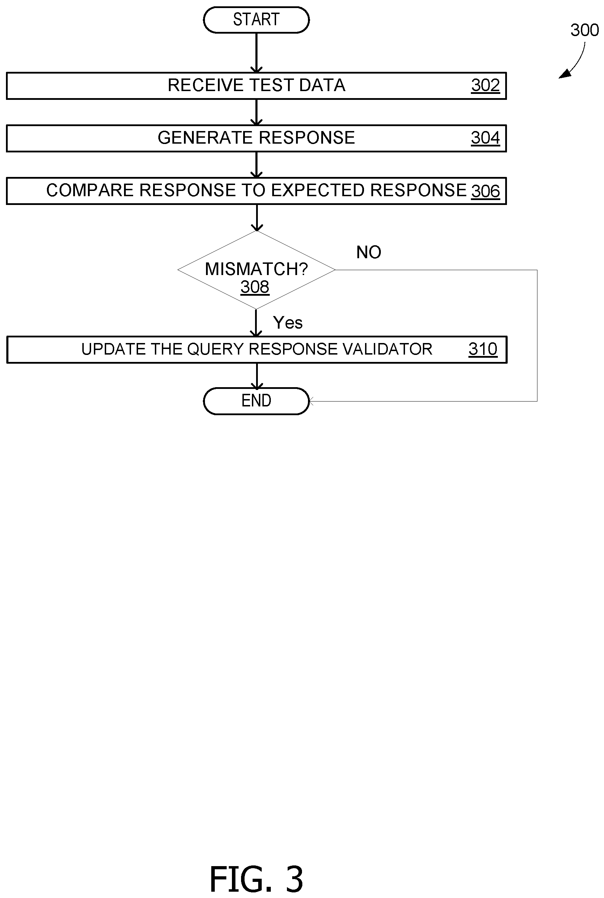

FIG. 3 is a flowchart of a process 300 of evaluating and updating a query response validator (e.g., query response validator 110). As shown in FIG. 3, the process 300 starts with receiving test data (e.g., golden queries 172). The test data consists of labeled query-response pairs, with the response representing the expected outcome of the corresponding query. At 304, the query response validator 110 generates a response for a query in the test data. At 306, the response is compared to the expected response from the test data. At 308, it is assessed whether the response from the query response validator 110 approximately matches the expected response from the test data. If a significant mismatch is identified, the query response validator 110 is updated at 310, and the process 300 terminates. Updating the query response validator 110 includes modifying the prompts provided to the query response validator 110. Otherwise, if there no meaningful mismatch is found, the process 300 terminates without updating the query response validator 110.

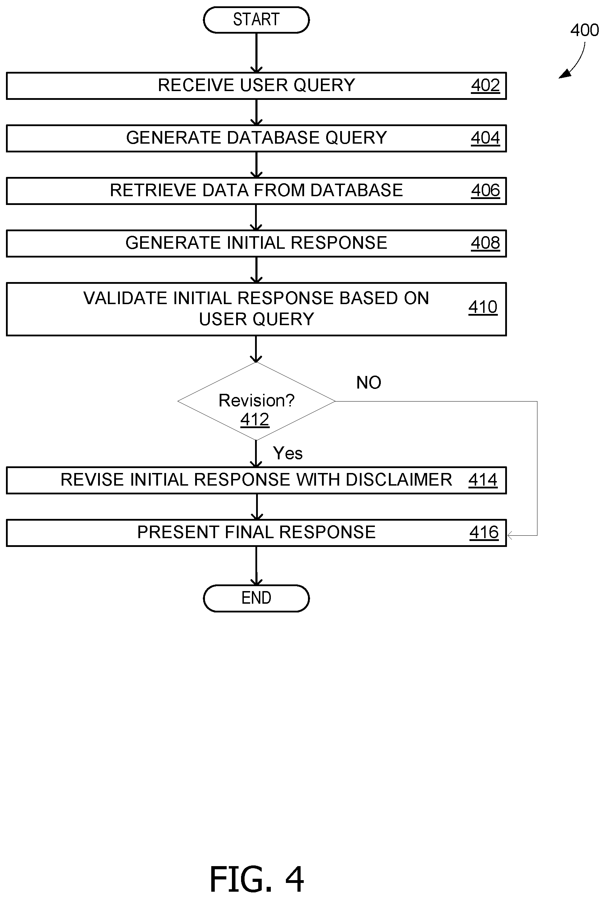

FIG. 4 is a flowchart of a process 400 of validating a tentative query response (e.g., initial response 142). As shown in FIG. 4, the process 400 starts with receiving a user query (e.g., user query 104) in natural language at 402. At 404, a database query (e.g., database query 128) is generated based on metrics and entities detected in the user query. The database query is in a database language, such as SQL. At 406, the database query is provided to a database, which executes the database query and returns data (e.g., retrieved data 130). At 408, an initial response (e.g., initial response 142) is generated based on the database query and the retrieved data. The initial response is generated based exclusively on the database query and the retrieved data, without referencing the user query. At 410, the initial response is validated based on the user query, where the initial response is analyzed in light of the user query to identify any discrepancies or intent mismatches. At 412, using the analysis of the initial response and the user query, a decision is made on whether the initial response requires a revision. If the revision is required, the initial response is revised to include a disclaimer at 414. If the revision is performed, the revised initial response is presented to the user as the final response (e.g., final response 162) at 416. If the revision is not required, the initial response 142 is presented as the final response (e.g., final response 162) at 416.

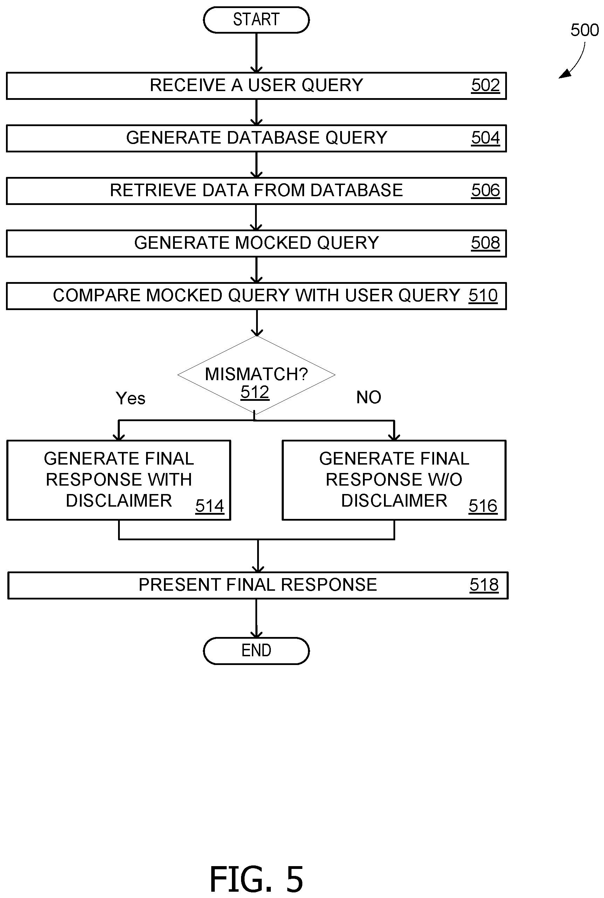

FIG. 5 is a flowchart of a process 500 of validating a response using a mocked query (e.g., mocked query 152). As shown in FIG. 5, the process 500 starts with receiving a user query (e.g., user query 104) at 502. At 504, a database query (e.g., database query 128), which is in a database language, is generated based on metrics and entities detected in the user query. At 506, the database query is provided to a database, which executes the database query and returns data (e.g., retrieved data 130). At 508, a mocked query is generated based on the database query. The mocked query is in natural language. At 510, the mocked query is compared against the user query. At 512, a determination is made whether there is a significant mismatch between the mocked query and the user query. After the determination at 512, a final response is generated based on the data retrieved from the database (e.g., retrieved data 130). If any meaningful mismatch is identified, the final response is generated with a disclaimer and/or an explanation that explains the mismatch at 514. If no significant mismatch is identified, the final response is generated without such an explanation at 516. The final response is presented to the user at 518.

### Additional Examples

An example computer-implemented method of validating a query response, the computer-implemented method comprising: receiving a user query in natural language; generating a database query in a database language based on the user query; retrieving data from a database, wherein the data is retrieved in response to executing the database query in the database; generating an initial response based on the database query and the data; determining whether the initial response is consistent with the user query; and based on determining that the initial response is not consistent with the user query, revising the initial response.

An example system comprising: a processor; and a memory storing instructions that are operative upon execution by the processor to: receive a user query in natural language; generate a database query in a database language based on the user query; retrieve data from a database, wherein the data is retrieved in response to executing the database query in the database; generate an initial response based on the database query and the data; determine whether the initial response is consistent with the user query; and based on determining that the initial response is not consistent with the user query, revise the initial response.

An example computer storage device having computer-executable instructions stored thereon, which, on execution by a computer, cause the computer to perform operations comprising: receiving a user query in natural language; generating a database query in a database language based on the user query; retrieving data from a database, wherein the data is retrieved in response to executing the database query in the database; generating an initial response based on the database query and the data; determining whether the initial response is consistent with the user query; and based on determining that the initial response is not consistent with the user query, revising the initial response.

Alternatively, or in addition to other examples described herein, examples include any combination of the following:
- wherein generating the database query is performed by an LLM.
- wherein the LLM retrieves relevant data based on determining that the database query does not return a close match from the database, and wherein the relevant data is provided as the data.
- wherein the database query is adjusted by the LLM based on the LLM retrieving the relevant data from the database.
- wherein generating the initial response based on the database query and the data comprises providing a prompt to generate the initial response, the prompt excluding the user query.
- wherein determining whether the initial response is consistent with the user query comprises analyzing the user query and the initial response as a question-answer pair by an LLM.
- wherein revising the initial response comprises generating a disclaimer, the disclaimer acknowledging an inconsistency between the user query and the initial response.
- providing the initial response to the user based on the determination that the initial response is consistent with the user query.
- providing the revised initial response to the user based on determining that the initial response is not consistent with the user query.
- generating a mocked query based on the database query; determining whether the mocked query is consistent with the user query; and based on determining that the mocked query is not consistent with the user query, generating a final response with an explanation.
- wherein the explanation acknowledges an inconsistency between the mocked query and the user query.
- generating the final response without the explanation based on determining that the mocked query is consistent with the user query.
- receive a set of test queries, the set of test queries comprising a plurality of labeled query-response pairs, wherein each labeled query-response pair comprises a query, an expected response for the query, and a label indicating whether a rewrite is required; for each labeled query-response pair: generate a test database query based on the query; retrieve test data from the database by executing the test database query; generate a test response based on the test database query and the test data; generate a revision decision based on determination whether the test response is consistent with the query; determine whether the revision decision matches the label; and based on determining that the revision decision does not match the label, adjust a prompt for generating the initial response and a prompt for determining whether the initial response is consistent with the user query.
- for each labeled query-response pair: determine whether the test response is consistent with the expected response; based on determining that the test response is inconsistent with the expected response, adjust the prompt.

### Example Operating Environment

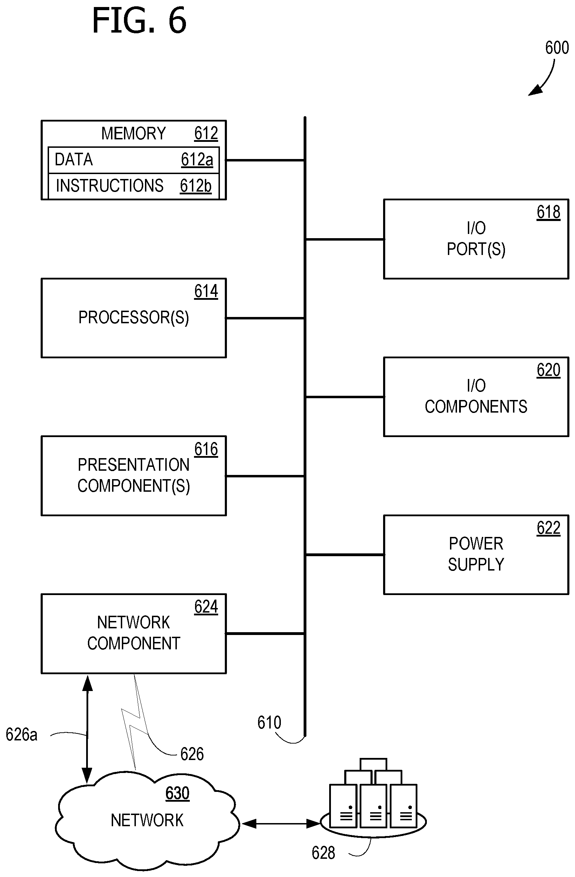

FIG. 6 is a block diagram of an example computing device 600 (e.g., a computer storage device) for implementing aspects disclosed herein, and is designated generally as computing device 600. In some examples, one or more computing devices 600 are provided for an on-premises computing solution. In some examples, one or more computing devices 600 are provided as a cloud computing solution. In some examples, a combination of on-premises and cloud computing solutions are used. Computing device 600 is but one example of a suitable computing environment and is not intended to suggest any limitation as to the scope of use or functionality of the examples disclosed herein, whether used singly or as part of a larger set.

Neither should computing device 600 be interpreted as having any dependency or requirement relating to any one or combination of components/modules illustrated. The examples disclosed herein may be described in the general context of computer code or machine-useable instructions, including computer-executable instructions such as program components, being executed by a computer or other machine, such as a personal data assistant or other handheld device. Generally, program components including routines, programs, objects, components, data structures, and the like, refer to code that performs particular tasks, or implement particular abstract data types. The disclosed examples may be practiced in a variety of system configurations, including personal computers, laptops, smart phones, mobile tablets, hand-held devices, consumer electronics, specialty computing devices, etc. The disclosed examples may also be practiced in distributed computing environments when tasks are performed by remote-processing devices that are linked through a communications network.

Computing device 600 includes a bus 610 that directly or indirectly couples the following devices: computer storage memory 612, one or more processors 614, one or more presentation components 616, input/output (I/O) ports 618, I/O components 620, a power supply 622, and a network component 624. While computing device 600 is depicted as a seemingly single device, multiple computing devices 600 may work together and share the depicted device resources. For example, memory 612 may be distributed across multiple devices, and processor(s) 614 may be housed with different devices.

Bus 610 represents what may be one or more buses (such as an address bus, data bus, or a combination thereof). Although the various blocks of FIG. 6 are shown with lines for the sake of clarity, delineating various components may be accomplished with alternative representations. For example, a presentation component such as a display device is an I/O component in some examples, and some examples of processors have their own memory. Distinction is not made between such categories as "workstation," "server," "laptop," "hand-held device," etc., as all are contemplated within the scope of FIG. 6 and the references herein to a "computing device." Memory 612 may take the form of the computer storage media referenced below and operatively provide storage of computer-readable instructions, data structures, program modules and other data for the computing device 600. In some examples, memory 612 stores one or more of an operating system, a universal application platform, or other program modules and program data. Memory 612 is thus able to store and access data 612a and instructions 612b that are executable by processor 614 and configured to carry out the various operations disclosed herein. Thus, computing device 600 comprises a computer storage device having computer-executable instructions 612b stored thereon.

In some examples, memory 612 includes computer storage media. Memory 612 may include any quantity of memory associated with or accessible by the computing device 600. Memory 612 may be internal to the computing device 600 (as shown in FIG. 6), external to the computing device 600 (not shown), or both (not shown). Additionally, or alternatively, the memory 612 may be distributed across multiple computing devices 600, for example, in a virtualized environment in which instruction processing is carried out on multiple computing devices 600. For the purposes of this disclosure, "computer storage media," "computer storage memory," "memory," and "memory devices" are synonymous terms for the memory 612, and none of these terms include carrier waves or propagating signaling.

Processor(s) 614 may include any quantity of processing units that read data from various entities, such as memory 612 or I/O components 620. Specifically, processor(s) 614 are programmed to execute computer-executable instructions for implementing aspects of the disclosure. The instructions may be performed by the processor, by multiple processors within the computing device 600, or by a processor external to the client computing device 600. In some examples, the processor(s) 614 are programmed to execute instructions such as those illustrated in the flow charts discussed below and depicted in the accompanying drawings. Moreover, in some examples, the processor(s) 614 represents an implementation of analog techniques to perform the operations described herein. For example, the operations may be performed by an analog client computing device 600 and/or a digital client computing device 600. Presentation component(s) 616 present data indications to a user or other device. Exemplary presentation components include a display device, speaker, printing component, vibrating component, etc.

One skilled in the art will understand and appreciate that computer data may be presented in a number of ways, such as visually in a graphical user interface (GUI), audibly through speakers, wirelessly between computing devices 600, across a wired connection, or in other ways. I/O ports 618 allow computing device 600 to be logically coupled to other devices including I/O components 620, some of which may be built in. Example I/O components 620 include, for example but without limitation, a microphone, joystick, game pad, satellite dish, scanner, printer, wireless device, etc.

Computing device 600 may operate in a networked environment via the network component 624 using logical connections to one or more remote computers. In some examples, the network component 624 includes a network interface card and/or computer-executable instructions (e.g., a driver) for operating the network interface card. Communication between the computing device 600 and other devices may occur using any protocol or mechanism over any wired or wireless connection. In some examples, network component 624 is operable to communicate data over public, private, or hybrid (public and private) using a transfer protocol, between devices wirelessly using short range communication technologies (e.g., near-field communication (NFC), Bluetooth^{™} branded communications, or the like), or a combination thereof. Network component 624 communicates over wireless communication link 626 and/or a wired communication link 626a to a remote resource 628 (e.g., a cloud resource) across a computer network 630. Various different examples of communication links 626 and 626a include a wireless connection, a wired connection, and/or a dedicated link, and in some examples, at least a portion is routed through the internet.

Although described in connection with an example computing device 600, examples of the disclosure are capable of implementation with numerous other general-purpose or special-purpose computing system environments, configurations, or devices. Examples of well-known computing systems, environments, and/or configurations that may be suitable for use with aspects of the disclosure include, but are not limited to, smart phones, mobile tablets, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, virtual reality (VR) devices, augmented reality (AR) devices, mixed reality devices, holographic device, and the like. Such systems or devices may accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions, or the specific components or modules illustrated in the figures and described herein. Other examples of the disclosure may include different computer-executable instructions or components having more or less functionality than illustrated and described herein. In examples involving a general-purpose computer, aspects of the disclosure transform the general-purpose computer into a special-purpose computing device when configured to execute the instructions described herein.

By way of example and not limitation, computer readable media comprise computer storage media and communication media. Computer storage media include volatile and nonvolatile, removable and non-removable memory implemented in any method or technology for storage of information such as computer readable instructions, data structures, program modules, or the like. Computer storage media are tangible and mutually exclusive to communication media. Computer storage media are implemented in hardware and exclude carrier waves and propagated signals. Computer storage media for purposes of this disclosure are not signals per se. Computer storage media for purposes of this disclosure are not transitory. Exemplary computer storage media include hard disks, flash drives, solid-state memory, phase change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that may be used to store information for access by a computing device. In contrast, communication media typically embody computer readable instructions, data structures, program modules, or the like in a modulated data signal such as a carrier wave or other transport mechanism and include any information delivery media.

The present disclosure is supplemented by the following examples.

Example 1: A computer-implemented method of validating a query response generated from a large language model (LLM), the computer-implemented method comprising: receiving a user query in natural language; generating a database query in a database language based on the user query; retrieving data from a database, wherein the data is retrieved in response to executing the database query in the database; generating an initial response based on the database query and the data retrieved; determining whether the initial response is consistent with the user query; and based on determining that the initial response is not consistent with the user query, revising the initial response.

Example 2: The computer-implemented method of Example 1, wherein generating the initial response based on the database query and the data retrieved comprises providing a prompt to generate the initial response, the prompt excluding the user query.

Example 3: The computer-implemented method of Example 1, wherein revising the initial response comprises generating a disclaimer, the disclaimer acknowledging an inconsistency between the user query and the initial response.

Example 4: The computer-implemented method of Example 1, further comprising: providing the initial response to a user based on determining that the initial response is consistent with the user query.

Example 5: The computer-implemented method of Example 1, further comprising: providing the revised initial response to a user based on determining that the initial response is not consistent with the user query.

Example 6: The computer-implemented method of Example 1, further comprising: generating a mocked query based on the database query; determining whether the mocked query is consistent with the user query; and based on determining that the mocked query is not consistent with the user query, generating a final response with an explanation.

Example 7: The computer-implemented method of Example 1, further comprising: receiving a set of test queries, the set of test queries comprising a plurality of labeled query-response pairs, wherein each labeled query-response pair comprises a query, an expected response for the query, and a label indicating whether a rewrite is required; for each labeled query-response pair: generating a test database query based on the query; retrieving test data from the database by executing the test database query; generating a test response based on the test database query and the test data; generating a revision decision based on determination whether the test response is consistent with the query; determining whether the revision decision matches the label; and based on determining that the revision decision does not match the label, adjusting a prompt for generating the initial response and a prompt for determining whether the initial response is consistent with the user query.

Example 8: A system comprising: a processor; and a memory storing instructions that are operative upon execution by the processor to: receive a user query in natural language; generate a database query in a database language based on the user query; retrieve data from a database, wherein the data is retrieved in response to executing the database query in the database; generate an initial response based on the database query and the data; determine whether the initial response is consistent with the user query; and based on determining that the initial response is not consistent with the user query, revise the initial response.

Example 9: The system of Example 8, wherein generating the initial response based on the database query and the data comprises providing a prompt to generate the initial response, the prompt excluding the user query.

Example 10: The system of Example 8, wherein revising the initial response comprises generating a disclaimer, the disclaimer acknowledging an inconsistency between the user query and the initial response.

Example 11: The system of Example 8, wherein the instructions are further operative to: provide the initial response to a user based on determining that the initial response is consistent with the user query.

Example 12: The system of Example 8, wherein the instructions are further operative to: provide the revised initial response to a user based on determining that the initial response is not consistent with the user query.

Example 13: The system of Example 8, wherein the instructions are further operative to: generate a mocked query based on the database query; determine whether the mocked query is consistent with the user query; and based on determining that the mocked query is not consistent with the user query, generate a final response with an explanation.

Example 14: The system of Example 8, wherein the instructions are further operative to: receive a set of test queries, the set of test queries comprising a plurality of labeled query-response pairs, wherein each labeled query-response pair comprises a query, an expected response for the query, and a label indicating whether a rewrite is required; for each labeled query-response pair: generate a test database query based on the query; retrieve test data from the database by executing the test database query; generate a test response based on the test database query and the test data; generate a revision decision based on determination whether the test response is consistent with the query; determine whether the revision decision matches the label; and based on determining that the revision decision does not match the label, adjust a prompt for generating the initial response and a prompt for determining whether the initial response is consistent with the user query.

Example 15: A computer storage device having computer-executable instructions stored thereon, which, on execution by a computer, cause the computer to perform operations comprising: receiving a user query in natural language; generating a database query in a database language based on the user query; retrieving data from a database, wherein the data is retrieved in response to executing the database query in the database; generating an initial response based on the database query and the data; determining whether the initial response is consistent with the user query; and based on determining that the initial response is not consistent with the user query, revising the initial response.

Example 16: The computer storage device of Example 15, wherein generating the initial response based on the database query and the data comprises providing a prompt to generate the initial response, the prompt excluding the user query.

Example 17: The computer storage device of Example 15, wherein revising the initial response comprises generating a disclaimer, the disclaimer acknowledging an inconsistency between the user query and the initial response.

Example 18: The computer storage device of Example 15, wherein the operations further comprise: providing the initial response to a user based on determining that the initial response is consistent with the user query.

Example 19: The computer storage device of Example 15, wherein the operations further comprise: providing the revised initial response to a user based on determining that the initial response is not consistent with the user query.

Example 20: The computer storage device of Example 15, wherein the operations further comprise: generating a mocked query based on the database query; determining whether the mocked query is consistent with the user query; and based on determining that the mocked query is not consistent with the user query, generating a final response with an explanation.

Provided is a method of validating query response is provided. The method includes receiving a user query in natural language, generating a database query in a database language based on the user query, and retrieving data from a database, wherein the data is retrieved in response to executing the database query in the database. The method further includes generating an initial response based on the database query and the data; determining whether the initial response is consistent with the user query; and based on determining that the initial response is not consistent with the user query, revising the initial response.

The order of execution or performance of the operations in examples of the disclosure illustrated and described herein is not essential, and may be performed in different sequential manners in various examples. For example, it is contemplated that executing or performing a particular operation before, contemporaneously with, or after another operation is within the scope of aspects of the disclosure. When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

## Claims

1. A computer-implemented method of validating a query response generated from a large language model, LLM, the computer-implemented method comprising
receiving a user query (104) in natural language;
generating a database query (128) in a database language based on the user query (104);
retrieving data (130) from a database (180), wherein the data (130) is retrieved in response to executing the database query (128) in the database (180);
generating an initial response (142) based on the database query (128) and the data (130) retrieved;
determining whether the initial response (142) is consistent with the user query (104); and
based on determining that the initial response (142) is not consistent with the user query (104), revising the initial response (142).

2. The computer-implemented method of claim **1,** wherein generating the initial response (142) based on the database query (128) and the data (130) retrieved comprises providing a prompt to generate the initial response (142), the prompt excluding the user query.

3. The computer-implemented method of claim 1 or 2, wherein revising the initial response (142) comprises generating a disclaimer, the disclaimer acknowledging an inconsistency between the user query (104) and the initial response (142).

4. The computer-implemented method of any preceding claim, further comprising
providing the initial response (142) to a user (102) based on determining that the initial response (142) is consistent with the user query (104).

5. The computer-implemented method of any preceding claim, further comprising
providing the revised initial response (162) to a user (102) based on determining that the initial response (142) is not consistent with the user query (104).

6. The computer-implemented method of any preceding claim, further comprising
generating a mocked query (152) based on the database query (128);
determining whether the mocked query (152) is consistent with the user query (104); and
based on determining that the mocked query (152) is not consistent with the user query (104), generating a final response (162) with an explanation.

7. The computer-implemented method of any preceding claim, further comprising
receiving a set of test queries (172), the set of test queries (172) comprising a plurality of labeled query-response pairs, wherein each labeled query-response pair comprises a query, an expected response for the query, and a label indicating whether a rewrite is required;
for each labeled query-response pair:
generating a test database query based on the query;
retrieving test data from the database by executing the test database query;
generating a test response based on the test database query and the test data;
generating a revision decision based on determination whether the test response is consistent with the query;
determining whether the revision decision matches the label; and
based on determining that the revision decision does not match the label, adjusting a prompt for generating the initial response and a prompt for determining whether the initial response is consistent with the user query.

8. A system (600) comprising a processor (614) and a memory (612) storing instructions (612b) that are operative upon execution by the processor to
receive a user query (104) in natural language;
generate a database query (128) in a database language based on the user query (104); retrieve data (130) from a database (180), wherein the data (130) is retrieved in response to executing the database query (128) in the database (180);
generate an initial response (142) based on the database query (128) and the data (130);
determine whether the initial response (142) is consistent with the user query (104); and
based on determining that the initial response (142) is not consistent with the user query (104), revise the initial response (142).

9. The system of claim 8, wherein generating the initial response (142) based on the database query (128) and the data (130) comprises providing a prompt to generate the initial response (142), the prompt excluding the user query (104).

10. The system of claim 8 or 9, wherein revising the initial response (142) comprises generating a disclaimer, the disclaimer acknowledging an inconsistency between the user query (104) and the initial response (142).

11. The system of any of claims 8 to 10, wherein the instructions (612b) are further operative to provide the initial response (142) to a user (102) based on determining that the initial response (142) is consistent with the user query (104).

12. The system of any of claims 8 to 11, wherein the instructions (612b) are further operative to:
provide the revised initial response (162) to a user (102) based on determining that the initial response (142) is not consistent with the user query (104).

13. The system of any of claims 8 to 12, wherein the instructions (612b) are further operative to:
generate a mocked query (152) based on the database query (128);
determine whether the mocked query (152) is consistent with the user query (104); and
based on determining that the mocked query (152) is not consistent with the user query (104), generate a final response (162) with an explanation.

14. The system of any of claims 8 to 13, wherein the instructions (612b) are further operative to:
receive a set of test queries (172), the set of test queries (172) comprising a plurality of labeled query-response pairs, wherein each labeled query-response pair comprises a query, an expected response for the query, and a label indicating whether a rewrite is required;
for each labeled query-response pair:
generate a test database query based on the query;
retrieve test data from the database by executing the test database query;
generate a test response based on the test database query and the test data;
generate a revision decision based on determination whether the test response is consistent with the query;
determine whether the revision decision matches the label; and
based on determining that the revision decision does not match the label, adjust a prompt for generating the initial response and a prompt for determining whether the initial response is consistent with the user query.

15. A computer storage device (600) having computer-executable instructions (612b) stored thereon, which, on execution by a computer (110), cause the computer to perform operations comprising
receiving a user query (104) in natural language;
generating a database query (128) in a database language based on the user query (104);
retrieving data (130) from a database (180), wherein the data (130) is retrieved in response to executing the database query (128) in the database (180);
generating an initial response (142) based on the database query (128) and the data (130);
determining whether the initial response (142) is consistent with the user query (104); and
based on determining that the initial response (142) is not consistent with the user query (104), revising the initial response (142).
